(19) **Europäisches Patentamt / European Patent Office / Office européen des brevets**

(11) **EP 2 475 736 B1**

(12) **FASCICULE DE BREVET EUROPEEN**

(45) Date de publication et mention de la délivrance du brevet:
**13.01.2016 Bulletin 2016/02**

(21) Numéro de dépôt: **10762991.7**

(22) Date de dépôt: **17.08.2010**

(51) Int Cl.:
**C09K 5/04** *(2006.01)* **F25B 9/00** *(2006.01)*

(86) Numéro de dépôt international:
**PCT/FR2010/051727**

(87) Numéro de publication internationale:
**WO 2011/030028 (17.03.2011 Gazette 2011/11)**

(54) **FLUIDE DE TRANSFERT DE CHALEUR EN REMPLACEMENT DU R-410A**

R-410A ERSETZENDE WÄRMEÜBERTRAGUNGSFLÜSSIGKEIT

HEAT TRANSFER FLUID REPLACING R-410A

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **11.09.2009 FR 0956245**

(43) Date de publication de la demande:
**18.07.2012 Bulletin 2012/29**

(73) Titulaire: **Arkema France
92700 Colombes (FR)**

(72) Inventeur: **RACHED, Wissam
F-69630 Chaponost (FR)**

(74) Mandataire: **Dang, Doris
ARKEMA FRANCE
Département Propriété Industrielle
420, rue d'Estienne d'Orves
92705 Colombes Cedex (FR)**

(56) Documents cités:
**US-A1- 2006 243 944    US-A1- 2008 314 073**

**Description**

La présente invention concerne l'utilisation des compositions ternaires du 2,3,3,3-tetrafluoropropène comme fluides de transfert de chaleur en remplacement du R-410A.

Les problèmes posés par les substances appauvrissant la couche d'ozone atmosphérique (ODP : ozone depletion potential) ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbones (HCFC).

L'industrie de la réfrigération et de la production d'air conditionné a beaucoup investi dans la substitution de ces fluides frigorigènes et c'est ainsi que les hydrofluorocarbures (HFC) ont été commercialisés.

Les (hydro)chlorofluorocarbures utilisés comme agents d'expansion ou solvants ont également été substitués par des HFC.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1300) est considéré comme ayant un pouvoir de réchauffement élevé. La contribution à l'effet de serre d'un fluide est quantifiée par un critère, le GWP (Global Warming Potentials) qui résume le pouvoir de réchauffement en prenant une valeur de référence de 1 pour le dioxyde de carbone.

Le dioxyde de carbone étant non-toxique, ininflammable et ayant un très faible GWP, a été proposé comme fluide frigorigène pour les systèmes de climatisation en remplacement du HFC-134a. Toutefois, l'emploi du dioxyde de carbone présente plusieurs inconvénients, notamment liés à la pression très élevée de sa mise en oeuvre en tant que fluide frigorigène dans les appareils et technologies existants.

Par ailleurs, le mélange R-410A constitué de 50 % en poids de pentafluoroéthane, 50 % en poids de HFC-134a est largement utilisé comme fluide de réfrigération dans l'air conditionné stationnaire. Ce mélange a toutefois un GWP de 2100.

Le document JP 4110388 décrit l'utilisation des hydrofluoropropènes de formule $C_3H_mF_n$, avec m, n représentant un nombre entier compris entre 1 et 5 inclus et m + n = 6, comme fluides de transfert de chaleur, en particulier le tetrafluoropropène et le trifluoropropène.

Le document WO2004/037913 divulgue l'utilisation des compositions comprenant au moins un fluproalcène ayant trois ou quatre atomes de carbone, notamment le pentafluoropropène et le tetrafluoropropène, de préférence ayant un GWP au plus de 150, comme fluides de transfert de chaleur.

Le document WO 2005/105947 enseigne l'ajout au tetrafluoropropène, de préférence le 1,3,3,3 tetrafluoropropène, d'un co-agent d'expansion tels que le difluorométhane, le pentafluoroéthane, le tetrafluoroéthane, le difluoroéthane, l'heptafluoropropane, l'hexafluoropropane, le pentafluoropropane, le pentafluorobutane, l'eau et le dioxyde de carbone.

Le document WO 2006/094303 divulgue une composition azéotropique contenant 7,4 % en poids du 2,3,3,3 tetrafluoropropène (1234yf) et 92,6 % en poids du difluorométhane (HFC-32). Ce document divulgue également une composition azéotropique contenant 91 % en poids du 2,3,3,3 tetrafluoropropène et 9 % en poids du difluoroéthane (HFC-152a).

Un échangeur de chaleur est un dispositif permettant de transférer de l'énergie thermique d'un fluide vers un autre, sans les mélanger. Le flux thermique traverse la surface d'échange qui sépare les fluides. La plupart du temps on utilise cette méthode pour refroidir ou réchauffer un liquide ou un gaz qu'il est impossible de refroidir ou chauffer directement.

Dans les systèmes à compression, l'échange thermique entre le fluide frigorigène et les sources de chaleur s'effectue par l'intermédiaire des fluides caloporteurs. Ces fluides caloporteurs sont à l'état gazeux (l'air dans l'air conditionné et la réfrigération à détente directe), liquide (l'eau dans les pompes à chaleur domestique, l'eau glycolée) ou diphasique.

Le document US2008/314073 décrit un système de transfert de chaleur comprenant un compresseur, un condenseur, un détendeur et un évaporateur et un dispositif à l'intérieur de la boucle fermée pour mesurer la pression interne du système. Il divulgue en outre, une méthode de détection de fuite des compositions de transfert de chaleur incluant, par exemple, des fluorooléfines dans un système de transfert de chaleur à boucle fermée.

Il existe différents modes de transfert :

- les deux fluides sont disposés parallèlement et vont dans le même sens : mode à co-courant (antiméthodique);
- les deux fluides sont disposés parallèlement mais vont dans le sens opposé: mode à contre-courant (méthodique);
- les deux fluides sont positionnés perpendiculairement : mode à courant croisé. Le courant croisé peut être à tendance co-courant ou contre-courant ;
- un des deux fluides fait un demi-tour dans un conduit plus large, que le deuxième fluide traverse. Cette configuration est comparable à un échangeur à co-courant sur la moitié de la longueur, et pour l'autre moitié à un échangeur à contre courant : mode à tête d'épingle.

La demanderesse a maintenant découvert que des compositions ternaires du 2,3,3,3 tetrafluoropropène, du 1,1-difluoroéthane et du difluorométhane sont particulièrement intéressantes comme fluide de transfert de chaleur.

Ces compositions ont à la fois un ODP nul et un GWP inférieur à celui des fluides de transfert de chaleur existants comme le R-410A.

En outre, leur performances (COP: coefficient de performance défini, comme étant la puissance utile fournie par le système sur la puissance apportée ou consommée par le système) sont supérieures à celles des fluides de transfert de chaleur existants comme le R-410A.

Les compositions utilisées comme fluide de transfert de chaleur dans la présente invention ont une température critique supérieure à 87°C (Température critique du R410A est de 70,5°C). Ces compositions peuvent être utilisés dans les pompes à chaleur pour fournir de la chaleur à des températures jusqu'au 65°C mais aussi à des températures plus élevées jusqu'au 87°C (domaine de température ou le R-410A ne peut pas être utilisé).

Les compositions utilisées comme fluide de transfert de chaleur dans la présente invention ont des températures à la sortie du compresseur équivalentes aux valeurs données par le R-410A. Les pressions au condenseur sont inférieures aux pressions du R-410A et les taux de compression sont également inférieurs. Ces compositions peuvent utiliser la même technologie des compresseurs utilisée par le R-410A.

Les compositions utilisées comme fluide de transfert de chaleur dans la présente invention ont des masses volumiques à la saturation vapeur inférieures à la masse volumique saturée vapeur du R-410A. Les capacités volumiques données par ces compositions sont équivalentes à la capacité volumique du R-410A (entre 91 et 95%). Grâce à ces propriétés, ces compositions fonctionnent avec des diamètres de canalisations inférieurs et donc moins de perte de charge dans les tuyauteries vapeur, ce qui augmente les performances des installations.

Ces compositions conviennent de préférence dans des systèmes de réfrigération à compression avec des échangeurs opérant en mode contre-courant ou en mode courant croisé à tendance contre-courant.

Ainsi, ces compositions peuvent être utilisées comme fluide de transfert de chaleur dans les pompes à chaleur, éventuellement réversible, dans l'air conditionné, et dans la réfrigération basse et moyenne température mettant en oeuvre des systèmes à compression avec des échangeurs en mode contre-courant ou en mode courant croisé à tendance contre-courant. La présente invention a donc pour objet l'utilisation des compositions ternaires du 2,3,3,3 tetrafluoropropène, du 1,1-difluoroéthane et du difluorométhane comme fluide de transfert de chaleur dans des systèmes de réfrigération en remplacement du mélange R-410A.

De préférence, ces compositions sont utilisées dans les systèmes de réfrigération à compression avec des échangeurs opérant en mode contre-courant ou en mode courant croisé à tendance contre-courant.

De préférence, les compositions utilisées dans la présente invention contiennent essentiellement de 5 à 83 % en poids du 2,3,3,3-tetrafluoropropène et de 2 à 50 % en poids du 1,1-difluoroéthane et de 15 à 75 % en poids du difluorométhane.

Avantageusement, les compositions utilisées contiennent essentiellement de 5 à 63 % en poids du 2,3,3,3 tetrafluoropropène et de 2 à 25 % en poids du difluoroéthane et de 35 à 70 % en poids de difluorométhane.

Les compositions particulièrement préférées contiennent essentiellement de 40 à 58 % en poids du 2,3,3,3 tetrafluoropropène de 40 à 50 % en poids de difluorométhane et de 2 à 10 % en poids de 1,1-difluoroéthane.

Les compositions utilisées dans la présente invention peuvent être stabilisées. Le stabilisant représente de préférence au plus 5 % en poids par rapport à la composition totale.

Comme stabilisants, on peut citer notamment le nitromethane, l'acide ascorbique, l'acide terephtalique, les azoles tels que le tolutriazole ou le benzotriazole, les composés phénoliques tels que le tocopherol, l'hydroquinone, le t-butyl hydroquinone, le 2,6-di-ter-butyl-4-methylphenol, les epoxydes (alkyl éventuellement fluoré ou perfluoré ou alkenyl ou aromatique) tels que les n-butyl glycidyl ether, hexanediol diglycidyl ether, allyl glycidyl ether, butylphenylglycidyl ether, les phosphites, les phosphates, les phosphonates, les thiols et lactones.

Un autre objet de la présente invention concerne un procédé de transfert de chaleur dans lequel on utilise des compositions ternaires du 2,3,3,3-tetrafluoropropène, du 1,1-difluoroéthane et du difluorométhane précités comme fluide de transfert de chaleur dans des systèmes de réfrigération en remplacement du mélange R-410A.

De préférence, le procédé est mis en oeuvre dans des systèmes de réfrigération à compression avec des échangeurs opérant en mode contre-courant ou en mode courant croisé à tendance contre-courant.

Le procédé selon la présente invention peut être mis en oeuvre en présence de lubrifiants tels que l'huile minérale, alkylbenzène, le polyalkylène glycol et le polyvinyl éther.

Les compositions utilisées dans la présente invention conviennent pour le remplacement du R-410A dans la réfrigération, l'air conditionné et les pompes à chaleur avec les installations actuelles.

PARTIE EXPERIMENTALE

Outils de calcul

L'équation RK-Soave est utilisée pour le calcul des densités, enthalpies, entropies et les données d'équilibre liquide vapeur des mélanges. L'utilisation de cette équation nécessite la connaissance des propriétés des corps purs utilisés dans les mélanges en question et aussi les coefficients d'interaction pour chaque binaire.
Les données nécessaires pour chaque corps pur sont:

Température d'ébullition, Température et pression critique, la courbe de pression en fonction de la température à partir du point d'ébullition jusqu'au point critique, les densités liquide saturée et vapeur saturé en fonction de la température.

*HFC-32, HFC-152a:*

Les données sur ces produits sont publiées dans l'ASHRAE Handbook 2005 chapitre 20, et sont aussi disponible sous Refrop (Logiciel développé par NIST pour le calcul des propriétés des fluides frigorigènes)

*HFO-1234yf:*

Les données de la courbe température-pression du HFO-1234yf sont mesurées par la méthode statique. La température et pression critique sont mesurées par un calorimètre C80 commercialisé par Setaram. Les densités, à saturation en fonction de la température, sont mesurées par la technologie du densimètre à tube vibrant développer par les laboratoires de l'école des Mines de Paris.

*Coefficient d'interaction des binaires*

L'équation RK-Soave utilise des coefficients d'interaction binaire pour représenter le comportement des produits en mélanges. Les coefficients sont calculés en fonction des données expérimentales d'équilibre liquide vapeur.
La technique utilisée pour les mesures d'équilibre liquide vapeur est la méthode de cellule statique analytique. La cellule d'équilibre comprend un tube saphir et est équipée de deux échantillonneurs ROLSITM électromagnétiques. Elle est immergée dans un bain cryothermostat (HUBER HS40). Une agitation magnétique à entraînement par champ tournant à vitesse variable est utilisée pour accélérer l'atteinte des équilibres. L'analyse des échantillons est effectuée par chromatographie (HP5890 seriesII) en phase gazeuse utilisant un catharomètre (TCD).

HFC-32 / HFO-1234yf, HFC-152a/HFO-1234yf:

Les mesures d'équilibre liquide vapeur sur le binaire HFC-32 / HFO-1234yf sont réalisées pour les isothermes suivantes : -10°C, 30°C et 70°C
Les mesures d'équilibre liquide vapeur sur le binaire HFC-152a / HFO-1234yf sont réalisées pour les isothermes suivantes : 10°C

HFC-32 / HFO-152a:

Les données d'équilibre liquide vapeur pour le binaire HFC-152a / HFC-32 sont disponible sous Refprop. Deux isothermes (-20°C et 20°C) et deux isobares (1 bar et 25bar) sont utilisées pour le calcul des coefficients d'interaction pour ce binaire.

**Système à compression**

Considérons un système à compression équipé d'un évaporateur et condenseur à contre-courant, d'un compresseur à vis et d'un détendeur.
Le système fonctionne avec 15 °C de surchauffe et 5°C de sous refroidissement. L'écart de température minimum entre fluide secondaire et le fluide frigorigène est considéré de l'ordre de 5°C.
Le rendement isentropique des compresseurs est fonction du taux de compression. Ce rendement est calculé suivant l'équation suivante:

$$\eta_{isen} = a - b(\tau - c)^2 - \frac{d}{\tau - e} \tag{1}$$

Pour un compresseur à vis, les constantes a, b, c, d et e de l'équation (1) du rendement isentropique sont calculées suivant les données types publiées dans le Handbook "Handbook of air conditioning and refrigeration, page 11.52".

La %CAP est le pourcentage du rapport de la capacité volumique fournie par chaque produit sur la capacité du R-410A

Le coefficient de performance (COP) et est défini, comme étant la puissance utile fournie par le système sur la puissance apportée ou consommée par le système.

Le coefficient de performance de Lorenz (COPLorenz) est un coefficient de performance de référence. Il est fonction de températures et est utilisé pour comparer les COP des différents fluides.

Le coefficient de performance de Lorenz est défini comme suit:

(Les températures Tsont en K)

$$T^{condenseur}_{moyenne} = T^{condenseur}_{entrée} - T^{condenseur}_{sortie} \tag{2}$$

$$T^{évaporateur}_{moyenne} = T^{évaporateur}_{sortie} - T^{évaporateur}_{entrée} \tag{3}$$

Le COP de Lorenz dans le cas de l'air conditionnée et réfrigération:

$$COPlorenz = \frac{T^{évaporateur}_{moyenne}}{T^{condenseur}_{moyenne} - T^{évaporateur}_{moyenne}} \tag{4}$$

Le COP de Lorenz dans le cas de chauffage:

$$COPlorenz = \frac{T^{condenseur}_{moyenne}}{T^{condenseur}_{moyenne} - T^{évaporateur}_{moyenne}} \tag{5}$$

Pour chaque composition, le coefficient de performance du cycle de Lorenz est calculé en fonction des températures correspondantes

Le %COP/COPLorenz est le rapport du COP du système par rapport au COP du cycle de Lorenz correspondant.

Résultats mode refroidissement ou Air conditionné

En mode refroidissement, le système à compression fonctionne entre une température d'entrée du fluide frigorigène à l'évaporateur de -5°C et une température d'entrée du fluide frigorigène au condenseur de 50°C. Le système fournit du froid à 0°C.

Les performances des compositions selon l'invention dans les conditions de fonctionnement refroidissement sont données dans le Tableau 1. Les valeurs des constituants (HFO-1234yf, HFC-32, HFC-152a) pour chaque composition sont données en pourcentage en poids.

## Tableau 1

| | | | Temp sortie évap (°C) | Temp sortie comp (°C) | T sortie cond (°C) | évap P (bar) | cond P (bar) | Taux (p/p) | Glide | rendement comp | % CAP | % COP / COPLorenz |
|---|---|---|---|---|---|---|---|---|---|---|---|---|
| | R410A | | -5 | 101 | 50 | 6,8 | 30,6 | 4,5 | 0,07 | 79,6 | 100 | 50,4 |
| HFO-1234yf | HFC-32 | HFC-152a | | | | | | | | | | |
| 50 | 45 | 5 | -1 | 95 | 45 | 5,6 | 23,3 | 4,2 | 4,00 | 80,5 | 92 | 55,9 |
| 45 | 50 | 5 | -2 | 99 | 46 | 5,7 | 24,4 | 4,2 | 3,48 | 80,3 | 95 | 55,4 |
| 45 | 45 | 10 | -1 | 97 | 45 | 5,4 | 22,8 | 4,2 | 4,26 | 80,4 | 92 | 56,5 |
| 40 | 50 | 10 | -1 | 100 | 46 | 5,6 | 23,9 | 4,3 | 3,87 | 80,2 | 95 | 56,1 |

Résultats mode chauffage

En mode chauffage, le système à compression fonctionne entre une température d'entrée du fluide frigorigène à l'évaporateur de -5°C et une température d'entrée du fluide frigorigène au condenseur de 50°C. Le système fournit de la chaleur à 45°C.

Les performances des compositions selon l'invention dans les conditions de fonctionnement en mode chauffage sont données dans le Tableau 2. Les valeurs des constituants (HFO-1234yf, HFC-32, HFC-152a) pour chaque composition sont données en pourcentage en poids.

## Tableau 2

| | | | Temp sortie évap (°C) | Temp sortie comp (°C) | T sortie cond (°C) | évap P (bar) | cond P (bar) | Taux (p/p) | Glide | rendement comp | % CAP | % COP / COPLorenz |
|---|---|---|---|---|---|---|---|---|---|---|---|---|
| | R410A | | -5 | 101 | 50 | 6,8 | 30,6 | 4,5 | 0,07 | 79,6 | 100 | 58,8 |
| HFO-1234yf | HFC-32 | HFC-152a | | | | | | | | | | |
| 45 | 50 | 5 | -2 | 99 | 46 | 5,7 | 24,4 | 4,2 | 3,48 | 80,3 | 92 | 63,1 |
| 40 | 50 | 10 | -1 | 100 | 46 | 5,6 | 23,9 | 4,3 | 3,87 | 80,2 | 91 | 63,6 |

Résultats refrigération basse température

En mode refrigération basse température, le système à compression fonctionne entre une température d'entrée du fluide frigorigène à l'évaporateur de -30°C et une température d'entrée du fluide frigorigène au condenseur de 40°C. Le système fournit du froid à -25°C.

Les performances des compositions selon l'invention dans les conditions de fonctionnement en mode refrigération sont données dans le Tableau 3. Les valeurs des constituants (HFO-1234yf, HFC-32, HFC-152a) pour chaque composition sont données en pourcentage en poids.

Tableau 3

| | | | Temp sortie évap (°C) | Temp sortie comp (°C) | T sortie cond (°C) | évap P (bar) | cond P (bar) | Taux (p/p) | Glide | rendement comp | % CAP | % COP / COPLorenz |
|---|---|---|---|---|---|---|---|---|---|---|---|---|
| | R410A | | -30 | 149 | 40 | 2,7 | 24,2 | 9,0 | 0,06 | 52,3 | 100 | 33,0 |
| HFO-1234yf | HFC-32 | HFC-152a | | | | | | | | | | |
| 45 | 50 | 5 | -27 | 137 | 36 | 2,3 | 19,1 | 8,4 | 3,35 | 56,9 | 93 | 38,8 |
| 40 | 50 | 10 | -26 | 140 | 35 | 2,2 | 18,6 | 8,5 | 3,73 | 56,4 | 93 | 38,9 |

**Revendications**

1. Utilisation d'une composition ternaire du 2,3,3,3 tetrafluoropropène, du 1,1-difluoroéthane et du difluorométhane comme fluide de transfert de chaleur dans des systèmes de réfrigération en remplacement du mélange R-410A.

2. Utilisation selon la revendication 1 **caractérisée en ce que** la composition ternaire contient essentiellement de 5 à 83 % en poids de 2,3,3,3 tetrafluoropropène et de 15 à 75 % en poids de difluorométhane et de 2 à 40 % en poids de difluoroéthane.

3. Utilisation selon la revendication 1 **caractérisée en ce que** la composition ternaire contient essentiellement de 5 à 63 % en poids de 2,3,3,3 tetrafluoropropène et de 35 à 70 % en poids de difluorométhane et de 2 à 25 % en poids de difluoroéthane.

4. Utilisation selon la revendication 1 **caractérisée en ce que** la composition contient essentiellement de 40 à 58 % en poids de 2,3,3,3 tetrafluoropropène et de 40 à 50 % en poids de difluorométhane et de 2 à 10 % en poids de difluoroéthane.

5. Utilisation selon l'une quelconque des revendications 1 à 4 **caractérisée en ce que** la composition est stabilisée.

6. Utilisation selon l'une quelconque des revendications 1 à 5 **caractérisée en ce que** des systèmes de réfrigération sont à compression.

7. Utilisation selon la revendication 6 **caractérisé en ce que** les systèmes opèrent avec des échangeurs en mode contre-courant ou en mode courant croisé à tendance contre-courant.

8. Procédé de transfert de chaleur dans lequel on utilise des compositions ternaires du 2,3,3,3 tetrafluoropropène, du 1,1-difluoroéthane et du difluorométhane comme fluide de transfert de chaleur dans les systèmes de réfrigération en remplacement du mélange R-410A.

9. Procédé selon la revendication 8 **caractérisé en ce que** les systèmes de réfrigération sont à compression opérant de préférence avec des échangeurs en mode contre-courant ou en mode courant croisé à tendance contre-courant.

10. Procédé selon la revendication 8 ou 9 **caractérisé en ce que** la composition contient essentiellement de 40 à 58 % en poids de 2,3,3,3 tetrafluoropropène et de 40 à 50 % en poids de difluorométhane et de 2 à 10 % en poids de difluoroéthane.

11. Procédé selon l'une quelconque des revendications 6 à 10 **caractérisé en ce qu'**il est mis en oeuvre en présence d'un lubrifiant.

**Patentansprüche**

1. Verwendung einer ternären Zusammensetzung von 2,3,3,3-Tetrafluorpropen, 1,1-Difluorethan und Difluormethan als Wärmeübertragungsfluid in Kälteanlagen als Ersatz für die Mischung R-410A.

2. Verwendung nach Anspruch 1, **dadurch gekennzeichnet, dass** die ternäre Zusammensetzung im Wesentlichen 5 bis 83 Gew.-% 2,3,3,3-Tetrafluorpropen und 15 bis 75 Gew.-% Difluormethan und 2 bis 40 Gew.-% Difluorethan enthält.

3. Verwendung nach Anspruch 1, **dadurch gekennzeichnet, dass** die ternäre Zusammensetzung im Wesentlichen 5 bis 63 Gew.-% 2,3,3,3-Tetrafluorpropen und 35 bis 70 Gew.-% Difluormethan und 2 bis 25 Gew.-% Difluorethan enthält.

4. Verwendung nach Anspruch 1, **dadurch gekennzeichnet, dass** die Zusammensetzung im Wesentlichen 40 bis 58 Gew.-% 2,3,3,3-Tetrafluorpropen und 40 bis 50 Gew.-% Difluormethan und 2 bis 10 Gew.-% Difluorethan enthält.

5. Verwendung nach einem der Ansprüche 1 bis 4, **dadurch gekennzeichnet, dass** die Zusammensetzung stabilisiert ist.

6. Verwendung nach einem der Ansprüche 1 bis 5, **dadurch gekennzeichnet, dass** es sich bei den Kälteanlagen um Kompressionskälteanlagen handelt.

7. Verwendung nach Anspruch 6, **dadurch gekennzeichnet, dass** die Anlagen mit Austauschern im Gegenstrom-Modus oder im Querstrom-Modus mit Gegenstrom-Tendenz arbeiten.

8. Verfahren zur Übertragung von Wärme, bei dem man eine ternäre Zusammensetzung von 2,3,3,3-Tetrafluorpropen, 1,1-Difluorethan und Difluormethan als Wärmeübertragungsfluid in Kälteanlagen als Ersatz für die Mischung R-410A verwendet.

9. Verfahren nach Anspruch 8, **dadurch gekennzeichnet, dass** es sich bei den Kälteanlagen um Kompressionskälteanlagen handelt, die vorzugsweise mit Austauschern im Gegenstrom-Modus oder im Querstrom-Modus mit Gegenstrom-Tendenz arbeiten.

10. Verfahren nach Anspruch 8 oder 9, **dadurch gekennzeichnet, dass** die Zusammensetzung im Wesentlichen 40 bis 58 Gew.-% 2,3,3,3-Tetrafluorpropen und 40 bis 50 Gew.-% Difluormethan und 2 bis 10 Gew.-% Difluorethan enthält.

11. Verfahren nach einem der Ansprüche 6 bis 10, **dadurch gekennzeichnet, dass** es in Gegenwart eines Schmiermittels durchgeführt wird.

**Claims**

1. Use of a ternary composition of 2,3,3,3-tetrafluoropropene, 1,1-difluoroethane and difluoromethane as heat transfer fluid in refrigeration systems replacing the mixture R-410A.

2. Use according to Claim 1, **characterized in that** the ternary composition contains essentially from 5 to 83 wt.% of 2,3,3,3-tetrafluoropropene and from 15 to 75 wt.% of difluoromethane and from 2 to 40 wt.% of difluoroethane.

3. Use according to Claim 1, **characterized in that** the ternary composition contains essentially from 5 to 63 wt.% of 2,3,3,3-tetrafluoropropene and from 35 to 70 wt.% of difluoromethane and from 2 to 25 wt.% of difluoroethane.

4. Use according to Claim 1, **characterized in that** the composition contains essentially from 40 to 58 wt.% of 2,3,3,3-tetrafluoropropene and from 40 to 50 wt.% of difluoromethane and from 2 to 10 wt.% of difluoroethane.

5. Use according to any one of Claims 1 to 4, **characterized in that** the composition is stabilized.

6. Use according to any one of Claims 1 to 5, **characterized in that** the refrigeration systems are of the compression type.

7. Use according to Claim 6, **characterized in that** the systems operate with exchangers in countercurrent mode or in crossed-current mode with countercurrent tendency.

8. Method of heat transfer in which ternary compositions of 2,3,3,3-tetrafluoropropene, 1,1-difluoroethane and difluoromethane are used as heat transfer fluid in refrigeration systems replacing the mixture R-410A.

9. Method according to Claim 8, **characterized in that** the refrigeration systems are of the compression type preferably operating with exchangers in countercurrent mode or in crossed-current mode with countercurrent tendency.

10. Method according to Claim 8 or 9, **characterized in that** the composition contains essentially from 40 to 58 wt.% of 2,3,3,3-tetrafluoropropene and from 40 to 50 wt.% of difluoromethane and from 2 to 10 wt.% of difluoroethane.

11. Method according to any one of Claims 6 to 10, **characterized in that** it is implemented in the presence of a lubricant.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 4110388 B
- WO 2004037913 A
- WO 2005105947 A
- WO 2006094303 A
- US 2008314073 A

**Littérature non-brevet citée dans la description**

- l'ASHRAE Handbook. 2005